# DEMANDE DE BREVET EUROPEEN

(11) **EP 2 538 593 A1**
(43) Date de publication de la demande: **26.12.2012**
(21) Numéro de dépôt: 12171881.1
(22) Date de dépôt: 13.06.2012
(51) Int. Cl.: H04J 14/02

(54) **Réseau tout-optique à architecture extensible**

(30) Priorité: 24.06.2011 FR 1155619
(71) Demandeur: FRANCE TELECOM, 75015 Paris (FR)
(72) Inventeur: Indre, Raluca-Maria, 75015 PARIS (FR); Le Rouzic, Esther, 22560 TREBEURDEN (FR); Roberts, James, 78960 VOISINS LE BRETONNEUX (FR)
(74) Mandataire: Cabinet Plasseraud

(57) **Abrégé**

L'invention concerne un réseau optique de télécommunications comprenant au moins deux groupements sources (GS) de noeuds optiques, chaque groupement source comprenant un contrôleur source (C_{GS}) et une pluralité de noeuds optiques sources (NOS₁,NOSₘ) connectés à un noeud optique de concentration (NOC_{GS}), au moins un groupement destinataire (GD) de noeuds optiques, chaque groupement destinataire comprenant une pluralité de noeuds optiques destinataires (NOD₁,NODₙ) connectés à un noeud optique de distribution (ND_{GD}). Dans ce réseau, au sein de chaque groupement source, chaque noeud optique source est apte à émettre un signal optique à une longueur d'onde (λ_{GS-GD}) spécifiquement allouée à une paire formée du groupement source et d'un groupement destinataire, le contrôleur source (C_{GS}) est configuré pour contrôler l'émission des signaux optiques par les noeuds optique sources, et le noeud optique de concentration est configuré pour fusionner des signaux optiques émis par les noeuds optiques sources en un signal optique agrégé à partir desdits signaux optiques. Par ailleurs, au sein de chaque groupement destinataire, le noeud optique de distribution est configuré pour diffuser un signal optique agrégé, à une longueur d'onde (λ_{GS-GD}) spécifiquement allouée à une paire formée du groupement destinataire et d'un groupement source, à la pluralité de noeuds optiques destinataires.

## Description

L'invention concerne le domaine des réseaux optiques de transmission, et plus particulièrement celui des réseaux optiques étendus et métropolitains.

Les réseaux d'accès optiques passifs (PON pour Passive Optical Networks en anglais) sont en cours de déploiement pour permettre aux abonnés de partager des infrastructures fibrées permettant d'accéder à internet.

Les signaux optiques descendants sont diffusés à un ensemble d'équipements d'abonnés communément appelés unités de réseau optique (ONU pour Optical Network Unit en anglais) par l'intermédiaire d'un ou plusieurs coupleurs/séparateurs optiques, qui permettent également de fusionner les signaux optiques montants provenant des unités de réseau optique, afin de les transmettre à un noeud central par l'intermédiaire d'un terminal de ligne optique (OLT pour Optical Line Terminal en anglais).

Afin d'éviter les collisions entre signaux montants au niveau des coupleurs/séparateurs optiques, les instants d'émission de ces signaux montants sont coordonnés, par exemple au moyen d'un programme fixe utilisant le multiplexage temporel ou d'un programme dynamique établi par le terminal de ligne optique en fonction des besoins des utilisateurs.

La transmission du signal descendant peut être effectuée par multicast optique en transmettant les données encodées optiquement à l'ensemble des unités de réseau optique. Chacune de ces unités convertit alors le signal descendant sous forme électrique, afin de reconnaître les données qui lui sont destinées. Il est également possible d'utiliser le multiplexage en longueurs d'onde (WDM pour Wavelength Division Multiplexing en anglais) pour transmettre plusieurs canaux optiques au sein d'une même fibre.

Afin de couvrir des étendues géographiques plus importantes, il a été proposé d'interconnecter des réseaux optiques passifs d'accès de type WDM pour obtenir un réseau d'accès métropolitain tout-optique.

Un premier exemple d'architecture allant dans ce sens est décrit dans l'article de M. Maier et al, intitulé "STARGATE: The next evolutionary step toward unleashing the potential of WDM EPONS", et publié dans la revue IEEE Communications Magazine, May 2007, dans lequel des réseaux optiques passifs d'accès sont connectés au moyen d'un réseau métropolitain en anneau, dans lequel une structure en anneau est superposée avec une structure en étoile afin de fournir une dérivation optique. Une telle architecture est cependant assez complexe et n'est pas envisageable pour des réseaux de grande taille.

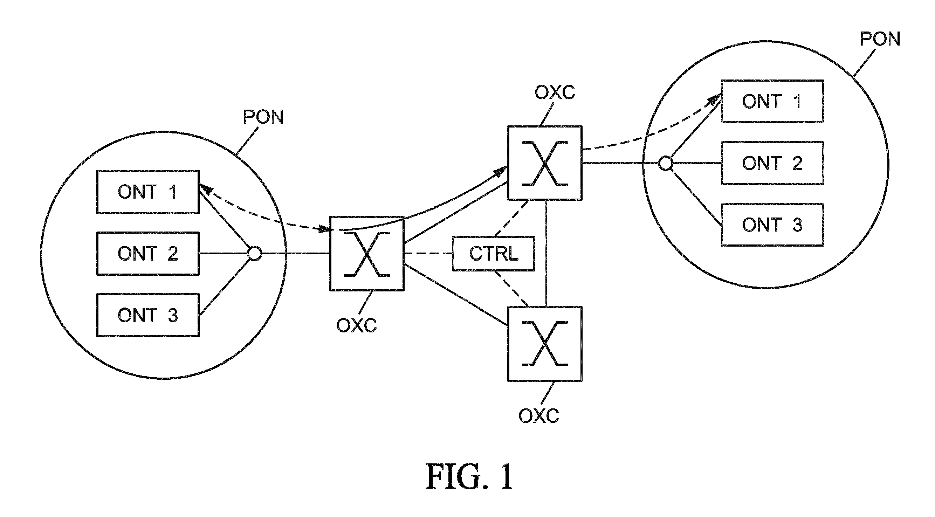

Une alternative d'architecture de réseau métropolitain tout-optique est décrite dans l'article de C. Roger et al, intitulé "Optical access-metro network architecture based on passive access and burst-mode transmission", publié dans le document « Proceedings of 7th Communication Networks and Services Research Conference, 2009 », et illustrée sur la figure 1.

Dans cette architecture, des réseaux optiques passifs sont interconnectés au moyen de canaux de longueurs d'onde circulant sur un réseau de commutateurs optiques (OXC pour Optical Cross Connect en anglais). Dans cette alternative, une longueur d'onde dédiée sert à connecter un premier réseau passif avec un deuxième réseau passif. Des rafales de signaux émis par les unités de réseau optique dans le premier réseau passif sont coordonnées afin d'éviter les collisions et diffusées à toutes les unités de réseau optique du deuxième réseau passif, cette coordination étant effectuée au moyen d'un noeud central de contrôle qui planifie les rafales pour tous les canaux du réseau d'accès métropolitain.

Cependant, cette architecture de réseau souffre également d'un certain nombre de désavantages.

Ainsi, d'une part, une telle architecture de réseau ne peut pas être étendue au contexte des réseaux étendus de type WAN (pour Wide Area Network en anglais). En effet, cette architecture repose sur un contrôle centralisé au moyen du noeud central de contrôle qui se situerait alors trop loin des unités de réseaux optiques partageant un canal commun, ce qui engendrerait des délais de programmation excessifs et un temps de latence inacceptable.

Par ailleurs, dans cette architecture, les réseaux optiques passifs d'accès sont définis de manière rigide, ce qui limite la flexibilité à assigner des flux de trafic avec des volumes de données adaptés à la capacité des canaux.

En outre, la quantité de trafic s'écoulant ente deux réseaux optiques passifs d'accès est typiquement bien inférieure à la capacité d'un canal sur une longueur d'onde.

Enfin, les unités de réseau optique ne peuvent communiquer au sein d'un même réseau optique passif avec une telle architecture, car cela obligerait à utiliser la même longueur d'onde pour le trafic entrant et sortant.

La présente invention a pour objet de remédier aux inconvénients précités des architectures existantes. Elle propose à cet effet un réseau optique présentant une architecture tout-optique capable de couvrir des régions très étendues, et donc applicable à des réseaux de type MAN (pour Metropolitan Area Network) ou WAN ou encore à des technologies de transmission de type WDM, grâce un système de contrôle décentralisé.

La présente invention propose ainsi un réseau optique de télécommunications comprenant :
au moins un groupement source de noeuds optiques, chaque groupement source comprenant un contrôleur source et une pluralité de noeuds optiques sources connectés à un noeud optique de concentration ;
au moins un groupement destinataire de noeuds optiques, chaque groupement destinataire comprenant une/ pluralité de noeuds optiques destinataires connectés à un noeud optique de distribution; et
dans lequel, au sein de chaque groupement source, chaque noeud optique source est apte à émettre des signaux optiques à au moins une longueur d'onde spécifiquement allouée à une paire formée du groupement source et d'un groupement destinataire, le contrôleur source est configuré pour contrôler l'émission des signaux optiques par les noeuds optiques sources, et le noeud optique de concentration est configuré pour fusionner des signaux optiques émis par les noeuds optiques sources en un signal optique agrégé à partir desdits signaux optiques ; et
dans lequel, au sein de chaque groupement destinataire, le noeud optique de distribution est configuré pour diffuser un signal optique agrégé à une longueur d'onde spécifiquement allouée à une paire formée d'un groupement source et du groupement destinataire à la pluralité de noeuds optiques destinataires.

Dans un mode de réalisation où le réseau comprend en outre une infrastructure optique comportant une pluralités de fibres optiques et connectée auxdits noeuds optiques de concentration et de distribution, chaque noeud optique de concentration est en outre configuré pour transmettre le signal optique agrégé à la longueur d'onde spécifiquement allouée à une paire formée du groupement source et d'un groupement destinataire vers au moins un noeud optique de distribution du groupement destinataire par l'intermédiaire de l'infrastructure optique.

Selon un mode de réalisation où le réseau comprend une pluralité de groupements destinataires, au sein de chaque groupement source, chaque noeud optique source est apte à émettre des signaux optiques à une pluralité de longueurs d'onde spécifiquement allouées respectivement à des paires formées du groupement source et de chacun des groupements destinataires.

Avantageusement, lequel le contrôleur source est configuré pour instruire, à chacun des noeuds optiques sources du groupement source, d'émettre le signal optique durant un intervalle de temps d'émission alloué au noeud optique source, l'intervalle de temps étant déterminé dynamiquement en fonction des demandes de trafic des noeuds optiques sources du groupement source.

Dans un mode particulier de réalisation, au sein de chaque groupement de source, la distance entre chaque noeud optique source et le contrôleur source est inférieure à 100 km.

Selon un autre mode particulier de réalisation, la distance entre le contrôleur source d'au moins un groupement source et le noeud optique de distribution d'au moins un groupement destinataire est supérieure à 100 km.

Dans un mode particulier de réalisation, au moins un des noeuds optiques sources d'un groupement source correspond à au moins un des noeuds optiques destinataires d'un groupement destinataire.

Dans un autre mode particulier de réalisation dans lequel au moins un groupement source correspond à un groupement destinataire, chaque noeud optique source du groupement source correspondant à un noeud optique destinataire du groupement destinataire et le noeud optique de concentration dudit groupement source correspondant au noeud optique de distribution du groupement destinataire, chaque noeud optique source étant connecté au noeud optique de concentration par l'intermédiaire d'au moins une fibre optique dédiée à la transmission descendante et une fibre optique dédiée à la transmission montante.

Avantageusement, le réseau optique est un réseau optique étendu ou métropolitain.

La présente invention propose en outre un procédé de transmission dans un réseau optique comprenant au moins un groupement source de noeuds optiques, lequel comprend un contrôleur source et une pluralité de noeuds optiques sources connectés à un noeud optique de concentration, au moins un groupement destinataire de noeuds optiques, lequel comprend une pluralité de noeuds optiques destinataires connectés à un noeud optique de distribution, et une infrastructure optique comprenant une pluralité de fibres optiques et connectée auxdits noeuds optiques de concentration et de distribution, le procédé comprenant, au sein de chaque groupement source :
contrôler, au moyen du contrôleur source, l'émission par une pluralité de noeuds optiques sources de signaux optiques à au moins une longueur d'onde spécifiquement allouée à une paire formée du groupement source et d'un groupement destinataire;
fusionner, au niveau du noeud optique de concentration du groupement source, la pluralité de signaux optiques émis en un signal optique agrégé à partir desdits signaux optiques;
le procédé comprenant en outre, au niveau du noeud optique de distribution de chaque groupement destinataire :
   diffuser, aux noeuds optiques destinataires du groupement destinataire, au moins un signal optique agrégé à une longueur d'onde spécifiquement allouée à une paire formée d'un groupement source et du groupement destinataire.

Selon un mode de réalisation, le procédé comprend en outre, au niveau de chaque noeud optique de concentration, la transmission du signal optique agrégé à la longueur d'onde spécifiquement allouée au groupement source vers au moins un noeud optique de distribution d'un groupement destinataire par l'intermédiaire de l'infrastructure optique.

Avantageusement, le contrôle de l'émission de la pluralité de signaux optique, au sein de chaque groupement source, comprend l'envoi d'une instruction à chacun des noeuds optiques sources d'émettre le signal optique durant un intervalle de temps d'émission alloué au noeud optique source, l'intervalle de temps étant déterminé en fonction de la capacité de la longueur d'onde spécifiquement allouée au groupement source.

Dans un mode de réalisation où le réseau optique comprend une pluralité de groupements destinataires, le contrôleur source contrôle l'émission, par la pluralité de noeuds optiques sources, de signaux optiques à une pluralité de longueurs d'onde spécifiquement allouées respectivement à des paires formées du groupement source et de chacun des groupements destinataires.

Le réseau optique et le procédé de transmission optique dans un tel réseau, objets de l'invention, seront mieux compris à la lecture de la description et à l'observation des dessins ci-après dans lesquels, outre la figure 1 relative à l'art antérieur :
- la figure 2 est un schéma synoptique illustrant un réseau optique selon l'invention;
- la figure 3 illustre les étapes d'un procédé de transmission optique au moyen du réseau optique selon la présente invention ;
- la figure 4A illustre un autre mode de réalisation dans lequel le réseau optique comporte un seul groupement source et plusieurs groupements destinataires ;
- la figure 4B illustre un autre mode de réalisation dans lequel le réseau optique comporte plusieurs groupements sources et plusieurs groupements destinataires ;
- la figure 5A illustre un autre mode de réalisation dans lequel le réseau optique comporte un groupement source et un groupement destinataire se recouvrant ; et
- la figure 5B illustre un autre mode de réalisation dans lequel le réseau optique comporte un groupement source et un groupement destinataire se confondant.

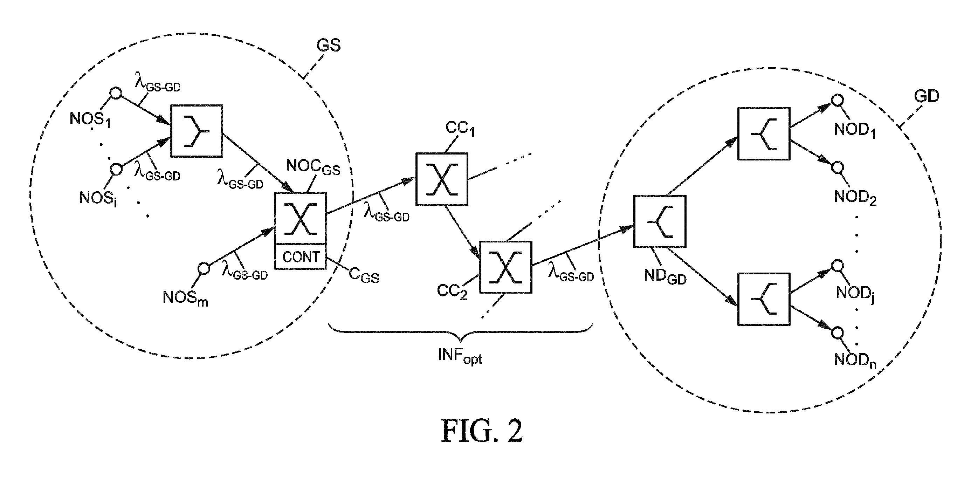

On se réfère tout d'abord à la **figure 2** sur laquelle est représenté un réseau optique selon la présente invention.

Ce réseau optique de télécommunications comprend, d'une part, au moins un groupement source de noeuds optiques et, d'autre part, au moins un groupement destinataire de noeuds optiques.

On entend ici par le terme « groupement » un ensemble, ou amas (« cluster » en anglais), comprenant un certain nombre d'éléments optiques, entre autres un ou des noeuds optiques, sans pour autant dans le cas d'une pluralité d'éléments optiques que ceux-ci forment une structure avec une architecture figée telle qu'un réseau.

Par ailleurs, on entend ici par « noeud optique » toute unité optique capable de recevoir des signaux optiques sur une ou plusieurs voie(s) d'entrée, de traiter les signaux optiques reçus et de fournir les signaux optiques traités sur une ou plusieurs voie(s) de sortie.

A ce titre, de tels noeuds optiques peuvent être aussi bien des noeuds de bord (« edge nodes » en anglais), des passerelles (« gateways » en anglais), des commutateurs optiques, seuls ou en combinaison. Un noeud de bord est une unité optique faisant l'interface entre des utilisateurs et un réseau optique. Une passerelle optique est une unité optique connectant le réseau optique au réseau Internet.

A cet effet, un noeud de bord ou une passerelle est apte à mettre en file d'attente des données à émettre en provenance des utilisateurs ou du réseau Internet et à acheminer ces données vers leurs destinations. Un commutateur optique est apte à aiguiller, diffuser et fusionner les signaux optiques de données optiquement. Ces commutateurs optiques sont lentement reconfigurables, par exemple reconfigurables dans une durée de l'ordre d'une seconde.

Un groupement source désigne ainsi un ensemble comprenant un certain nombre de noeuds optiques capables d'émettre des données en direction montante, c'est-à-dire à destination d'un ou de plusieurs noeuds optiques du réseau optique. Un groupement destinataire désigne un ensemble comprenant un certain nombre de noeuds optiques capables de recevoir les données émises par les noeuds optiques d'un groupement source. Ces groupements peuvent donc rassembler des noeuds optiques réunis sur la base d'un critère déterminé par l'opérateur du réseau, et ce de manière flexible en raison de la reconfiguration lente des noeuds optiques, comme cela est expliqué plus loin.

Sur cette figure 2, un seul groupement source (désigné par GS) et un seul groupement destinataire (désigné par GD) sont illustrés, pour bien illustrer le principe de l'invention, mais le réseau peut comprendre un nombre plus important de groupements sources ou destinataires, comme il sera discuté plus loin.

Le groupement source GS comprend un contrôleur source C_{GS} ainsi qu'une pluralité de noeuds optiques NOS₁,...,NOSᵢ,...NOSₘ, désignés sous le terme de « noeuds optiques sources », lesquels sont connectés à un noeud optique NOC_{GS}, désigné par le terme de « noeud optique de concentration », par l'intermédiaire d'un ensemble de fibres optiques et d'éléments optiques intermédiaires tels que des coupleurs ou des commutateurs optiques.

Pour sa part, le groupement destinataire GD comprend une pluralité de noeuds optiques NOD₁,NOD₂,...,NODⱼ,...NODₙ, désignés sous le terme de « noeuds optiques destinataires », lesquels sont connectés à un noeud optique ND_{GD}, désigné par le terme de « noeud optique de distribution ».

Dans ce réseau, au sein de chaque groupement source, chaque noeud optique source NOSᵢ est apte à émettre des signaux optiques à au moins une longueur d'onde λ_{GS-GD} spécifiquement allouée à une paire (groupement source GS, groupement destination GD), grâce à un émetteur optique de type diode laser. Dans une telle situation, la longueur d'onde utilisée par les noeuds optiques sources au sein de chaque groupement source GS est non seulement associée spécifiquement au groupement source GS, mais également au groupement destinataire GD auquel les données encodées optiquement sur les signaux émis sont destinées.

En d'autres termes, pour chaque paire de groupements source et destinataire (GSᵢ,GDⱼ), une longueur d'onde allouée uniquement à cette paire (dénotée λ_{GSi-GDj}) est utilisée par les noeuds optiques sources du groupement source pour transmettre des données vers les noeuds optiques destinataires du groupement destinataire.

Ainsi, pour acheminer des données à destination d'un groupement destinataire GD particulier à partir d'un groupement source GS, il suffit de connaître une longueur d'onde λ_{GS}-_{GD} allouée à la paire (groupement source, groupement destination) et d'émettre sur cette longueur d'onde λ_{GS-GD}.

L'acheminement des données en interne à un groupement GS correspond au cas particulier où les groupements source et destinataire se confondent. Dans ce cas particulier, la longueur d'onde peut alors être notée λ_{GS}.

Le contrôleur source C_{GS} est, quant à lui, connecté à chaque noeud optique source NOS₁,...,NOSᵢ,...NOSₘ et configuré pour contrôler l'émission des signaux optiques par ces différents noeuds optiques sources NOS₁,...,NOSᵢ,...NOSₘ. Une telle connexion est avantageusement de nature optique, par le biais d'un canal optique de contrôle spécifiquement dédié au contrôle des noeuds optiques sources. Dans un mode de réalisation particulier, un autre canal de contrôle permet également aux noeuds optiques sources de transmettre des informations à destination du contrôleur, notamment relatives à leurs demandes de trafic. Ces informations sont destinées à permettre au contrôleur d'appliquer une stratégie d'allocation, afin d'éviter des collisions.

Le noeud optique de concentration NOC_{GS} est configuré pour recevoir les différents signaux optiques émis par les noeuds optiques sources NOS₁,...,NOSᵢ,...NOSₘ, et former un signal optique agrégé à partir desdits signaux optiques reçus.

A ce titre, le noeud optique de concentration NOC_{GS} peut être un commutateur optique capable d'être connecté à toutes les fibres amenant les signaux optiques des noeuds optiques sources, par l'intermédiaire de coupleurs ou de commutateurs optiques le cas échéant, afin de fusionner ces différents signaux optiques en un seul signal optique de même longueur d'onde.

Par ailleurs, au sein de chaque groupement destinataire de ce réseau, le noeud optique de distribution ND_{GD} est configuré pour diffuser le signal optique agrégé reçu d'un groupement source GS (et donc émis à une longueur d'onde λ_{GS-GD} spécifiquement allouée à cette paire de groupements source GS et destinataire GD) vers l'ensemble des noeuds optiques destinataires NOD₁,...,NODⱼ,...NODₙ du groupement destinataire GD auquel appartient le noeud optique de distribution ND_{GD}, par l'intermédiaire le cas échéant d'autres noeuds de diffusion (coupleur/séparateur). A ce titre, ce noeud optique de distribution ND_{GD} peut être un coupleur/séparateur ou un commutateur optique.

Ainsi, le fait d'avoir un contrôleur optique d'émission au niveau d'un groupement source de noeuds optiques, et non au niveau de l'architecture coeur de réseau, permet de distribuer la gestion des flux de données optiques de manière délocalisée et permet d'éloigner les noeuds optiques des groupements sources des noeuds optiques des groupements destinataires sans être limité en termes de distance.

Ce réseau optique comprend par ailleurs une infrastructure optique INFₒₚₜ connectée aux différents noeuds optiques de concentration et de distribution, c'est-à-dire reliant les groupements sources aux groupements destinataires. Cette infrastructure optique INFₒₚₜ comporte notamment une pluralité de fibres optiques connectées entre elles par l'intermédiaire de commutateurs optiques (deux commutateurs CC₁ et CC₂ sont illustrés sur la figure 2, à titre d'exemple non limitatif) permettant le routage de signaux optiques et permet de relier entre eux des groupements de noeuds optiques séparés par des distances importantes, i.e. supérieures à 100 km par exemple.

Ainsi, pour permettre au groupement source GS de transmettre des données vers le groupement destinataire GD auquel il est connecté par l'intermédiaire de l'infrastructure optique INFₒₚₜ, le noeud optique de concentration NOC_{GS} est en outre configuré pour transmettre le signal optique agrégé, formé à partir des différents signaux optiques reçus des noeuds optiques sources, à la longueur d'onde λ_{GS-GD} vers le noeud optique de distribution ND_{GD} du groupement destinataire GD par l'intermédiaire de l'infrastructure optique INFₒₚₜ. Cette infrastructure optique INFₒₚₜ redirige alors ce signal optique agrégé vers le noeud optique de distribution ND_{GD} du groupement destinataire GD, qui se charge alors de distribuer ce signal agrégé aux différents noeuds optiques destinataires du groupement destinataire GD.

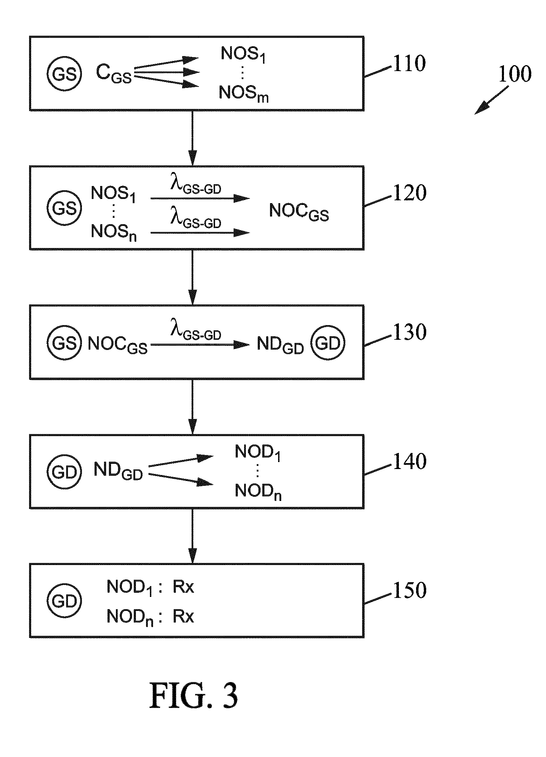

On se réfère maintenant à la **figure 3** qui illustre les étapes d'un procédé 100 de transmission optique au moyen du réseau optique selon la présente invention.

Dans ce procédé, au sein du groupement source GS, l'émission d'une pluralité de signaux optiques par une pluralité de noeuds optiques sources émetteurs au sein de ce groupement source est contrôlée par le contrôleur source C_{GS} de ce groupement source (étape 110). Ces différents signaux sont émis sur au moins une longueur d'onde λ_{GS-GD} spécifiquement allouée à la paire constituée par ce groupement source GS et un groupement destinataire GD.

Dans un mode de réalisation particulier, ce contrôle comprend l'envoi d'instructions, du contrôleur source à chacun des noeuds optiques sources émetteurs, d'émission de signal optique durant un intervalle de temps d'émission alloué spécifiquement au noeud optique source en question.

Les intervalles de temps alloués à chaque noeud optique source sont déterminés en fonction du nombre de noeuds optiques sources émetteurs du groupement source GS, de la capacité de transmission à la longueur d'onde λ_{GS-GD} du groupement source GS et du temps de propagation entre le noeud optique source et le contrôleur source. La capacité de transmission dépend notamment du débit binaire des noeuds optiques sources émetteurs. Les intervalles de temps sont avantageusement alloués dynamiquement et en fonction des demandes des noeuds optiques sources.

Ainsi, si la capacité de transmission est de 10 Gbit/s et que le groupement source GS comporte 10 noeuds optiques sources émetteurs, chacun de ces 10 noeuds optiques sources émetteurs ayant des demandes d'un Gbits/s se voit allouer un ou plusieurs intervalles de temps d'émission lui permettant d'envoyer des données avec un débit moyen de 1 Gbit/s de données, le début de cet ou de ces intervalles de temps étant par ailleurs déterminé en prenant en compte notamment le temps de trajet optique entre le noeud source optique émetteur et le noeud optique de concentration NOC_{GS} afin de permettre une fusion sans recouvrement au niveau de ce dernier. La stratégie d'allocation au niveau du contrôleur est également prise en compte pour la détermination du début de l'intervalle de temps.

Les signaux optiques émis à la longueur d'onde λ_{GS-GD} par les différents noeuds optiques sources émetteurs sont ensuite reçus (étape 120) par le noeud optique de concentration NOC_{GS} du groupement source GS, lequel forme un signal optique agrégé à partir de ces signaux optiques reçus.

Ce signal optique agrégé peut alors être transmis vers les noeuds optiques destinataires d'un groupement destinataire GD. Pour ce faire, au niveau du noeud optique de distribution ND_{GD} du groupement destinataire, le procédé se poursuit alors par la distribution (étape 140) du signal optique agrégé à la longueur d'onde λ_{GS-GD} aux différents noeuds optiques destinataires NOD₁,...,NODₙ, du groupement destinataire GD (étape 140).

Après avoir reçu un tel signal optique agrégé, chaque noeud optique destinataire NODⱼ peut alors convertir le signal optique en un signal électrique et récupérer les données qui lui sont destinées (étape 150), en se référant à un champ d'adresse contenu dans le signal reçu.

Lorsque le groupement source GS est séparé du groupement destinataire GD par l'intermédiaire de l'infrastructure optique INFₒₚₜ, le procédé comprend en outre, au niveau du noeud optique de concentration NOC_{GS}, la transmission du signal optique agrégé, formé à partir des signaux optiques reçus des noeuds optiques sources émetteurs, à la longueur d'onde λ_{GS-GD} vers le noeud optique de distribution ND_{GD} du groupement destinataire GD par l'intermédiaire de l'infrastructure optique INFₒₚₜ (étape 130), ce qui permet la transmission de données de manière tout-optique entre des noeuds optiques séparés de distances conséquentes.

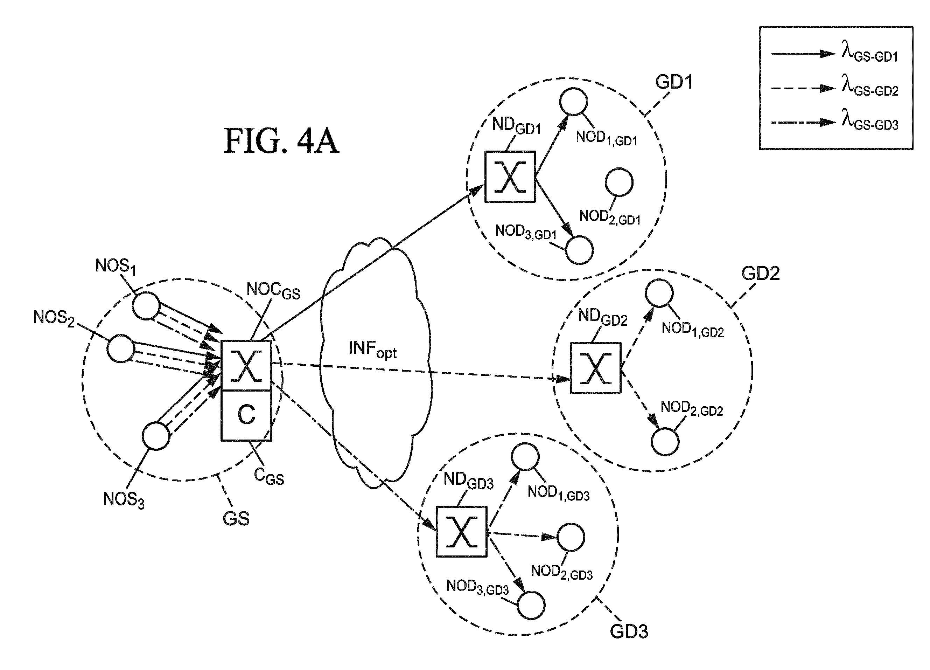

Jusqu'ici, seul le cas où le réseau comporte un seul groupement source et un seul groupement destinataire a été décrit en détail. Cependant, le réseau selon la présente invention peut comprendre un nombre quelconque de groupement destinataires. Afin d'illustrer ceci, on se réfère maintenant à la **figure 4A** qui représente un autre mode de réalisation du réseau optique selon la présente invention.

Dans cet autre mode de réalisation, le réseau comporte un groupement source GS connecté à trois groupements destinataires GD1 à GD3 par l'intermédiaire d'une infrastructure optique INFₒₚₜ.

Les trois groupements destinataires GD1 à GD3 comprennent chacun un noeud optique de distribution (respectivement les noeuds ND_{GD1}, ND_{GD2} et ND_{GD3}) connecté à plusieurs noeuds optiques destinataires (respectivement les noeuds NOD₁,_{GD1} à NOD₃,_{GD1}, les noeuds NOD₁,_{GD2} à NOD₂,_{GD2} et NOD₁,_{GD3} à NOD₃,_{GD3}).

Le groupement source GS comprend trois noeuds optiques sources NOS₁ à NOS₃, connectés à un noeud optique de concentration NOC_{GS} auquel ils envoient des signaux optiques sur des longueurs d'onde spécifiquement allouées à chaque paire de groupement source-groupement destinataire, ainsi qu'un contrôleur source C_{GS} contrôlant l'émission de ces signaux optiques, similairement à ce qui a été décrit précédemment.

En d'autres termes :
- une première longueur d'onde λ_{GS-GD1}, spécifiquement allouée à la première paire de groupements (GS,GD1), est employée pour la transmission de données du groupement source GS vers le groupement destinataire GD1 ;
- une deuxième longueur d'onde λ_{GS-GD2}, spécifiquement allouée à la deuxième paire de groupements (GS,GD2), est employée pour la transmission de données du groupement source GS vers le groupement destinataire GD2 ; et
- une troisième longueur d'onde λ_{GS-GD3}, spécifiquement allouée à la troisième paire de groupements (GS,GD3), est employée pour la transmission de données du groupement source GS vers le groupement destinataire GD3.

Pour contrôler les noeuds optiques sources NOS₁ à NOS₃, le contrôleur source C_{GS} peut comprendre un émetteur optique chargé d'envoyer des signaux optiques de contrôle, sur une longueur d'onde de contrôle dédiée à cette fonction et distincte des longueurs d'onde λ_{GS-GD1}, λ_{GS-GD2}, λ_{CS-CD3} comportant des instructions d'émission (autrement dit des autorisations d'émission) aux noeuds optiques sources.

Les noeuds optiques sources peuvent être équipés d'un, voire plusieurs, émetteurs optiques accordables capables d'envoyer des rafales de signaux optiques sur n'importe quelle voie optique de l'infrastructure optique, ainsi que sur un canal de contrôle en direction du contrôleur source C_{GS}.

Le contrôleur source C_{GS} attribue des intervalles de temps d'émission aux différents noeuds optiques sources NOS₁ à NOS₃. L'instant de départ et la durée de ces intervalles de temps sont déterminés (par exemple au préalable ou par calcul dynamique en temps réel) afin d'éviter les collisions au niveau du noeud optique de concentration NOC_{GS}.

Le contrôleur source C_{GS}, lorsqu'il contrôle l'émission de ces signaux optiques par les noeuds optiques sources NOS₁ à NOS₃, peut faire en sorte que les intervalles de temps attribués à un noeud optique source donné soit tel que ce noeud optique source n'ait pas à transmettre, à un instant donné, des signaux optiques sur un nombre de canaux optiques supérieur au nombre d'émetteurs optiques accordables qu'il possède.

Dans un mode de réalisation particulier, les noeuds optiques sources peuvent être équipés d'un émetteur optique supplémentaire dédié à l'envoi de rapports sur la taille de file d'attente sur l'autre canal de contrôle. Ceci permet de faciliter l'envoi de ces rapports.

La sélection des noeuds optiques destinataires formant un groupement destinataire GDᵢ peut être faite de telle sorte que le trafic combiné de données entre tous les noeuds optiques sources du groupement source et les noeuds optiques destinataires sélectionnés pour former ce groupement destinataire GDᵢ soit en deçà de la capacité maximale, en termes de trafic de données, de la longueur d'onde λ_{GS-GDi}.

Cette capacité maximale de trafic de données, exprimées en bits par seconde, est en général légèrement inférieure au débit d'un canal optique sur une longueur d'onde donnée. Cette capacité maximale dépend, entre autres critères, de la stratégie d'allocation des intervalles de temps implémentée par le contrôleur source C_{GS} et du nombre d'émetteurs accordables dont sont équipés les noeuds optiques sources.

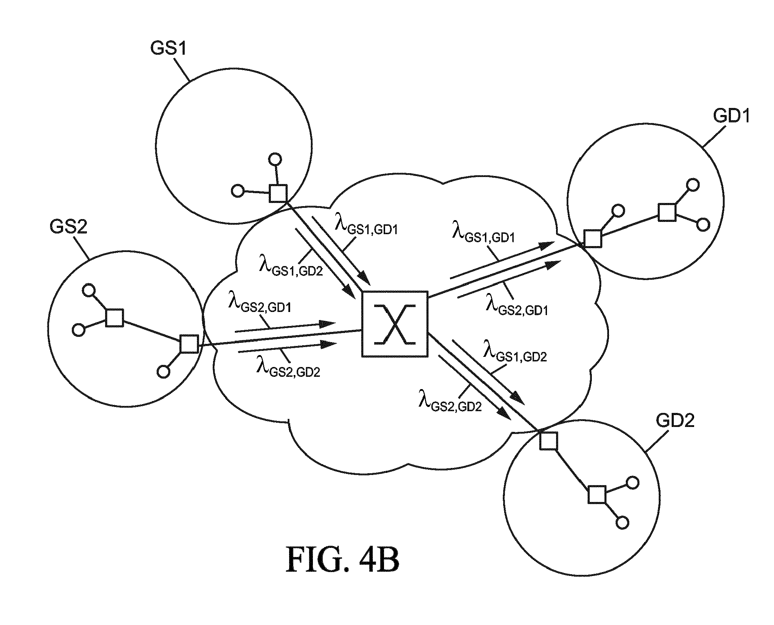

On se réfère maintenant à la figure 4B qui illustre un mode de réalisation dans lequel le réseau optique comporte plusieurs groupements sources et plusieurs groupements destinataires.

Ici, à titre purement illustratif, le réseau optique comporte deux groupements sources GS1 et GS2 et deux groupements destinataires GD1 et GD2, mais ce mode de réalisation peut être extrapolé à tout réseau comportant un nombre quelconque de groupements sources et de groupements destinataires.

La sélection des noeuds optiques sources formant un groupement source GSᵢ peut être réalisée de telle sorte que le trafic combiné de données entre tous les noeuds optiques sources dans le groupement source en interne au groupement soit en deçà de la capacité maximale, en termes de trafic de données, de la longueur d'onde λ_{GSi}, spécifiquement allouée au groupement source GSᵢ. Il est également possible de sélectionner des noeuds optiques sources proches géographiquement pour former un groupement source, afin de minimiser le temps de propagation entre les noeuds optiques sources et le contrôleur source.

Cette capacité maximale de trafic de données, exprimées en bits par seconde, est en général légèrement inférieure au débit d'un canal optique sur une longueur d'onde donnée. Cette capacité maximale dépend, entre autres critères, de la stratégie d'allocation des intervalles de temps implémentée par le contrôleur source C_{GS} et du nombre d'émetteurs accordables dont sont équipés les noeuds optiques sources.

Comme décrit précédemment :
- une première longueur d'onde λ_{GS1,GD1} est spécifiquement allouée à la transmission de données du groupement source GS1 vers le groupement destinataire GD1 ;.
- une deuxième longueur d'onde λ_{GS1,GD2} est spécifiquement allouée à la transmission de données du groupement source GS 1 vers le groupement destinataire GD2 ;
- une troisième longueur d'onde λ_{GS2,GD1} est spécifiquement allouée à la transmission de données du groupement source GS2 vers le groupement destinataire GD1 ; et
- une quatrième longueur d'onde λ_{GS2,CD2} est spécifiquement allouée à la transmission de données du groupement source GS2 vers le groupement destinataire GD2.

Toutes ces longueurs d'onde sont différentes afin de bien séparer les différentes voies de transmission.

L'exemple détaillé ci-après illustre un avantage en termes de ressources du réseau optique qu'il y a à utiliser une telle architecture de type groupement-à-groupement dans le cas d'un réseau important présentant 900 noeuds optiques à interconnecter. Par ressources du réseau optique, on entend aussi bien les longueurs d'onde, les fibres optiques et les émetteurs et les récepteurs. Il est bien entendu que l'invention ne se restreint pas à cet avantage.

Dans un tel réseau, l'interconnexion point-à-point des noeuds sources requiert que chaque noeud source dispose d'émetteurs optiques, permettant d'émettre une longueur d'onde distincte pour tous les autres noeuds optiques (soit 899 longueurs d'onde) et que chaque noeud destinataire dispose de récepteurs optiques, permettant de recevoir une longueur d'onde distincte pour tous les autres noeuds optiques (soit 899 longueurs d'onde), ce qui représente un nombre très important d'émetteurs, de récepteurs et de fibres optiques à employer et se révèle extrêmement couteux.

L'utilisation d'une architecture dans laquelle les 900 noeuds optiques sont rassemblés en 30 groupements destinataires de 30 noeuds optiques chacun (point-à-multipoints) permet de réduire les coûts au niveau des sources d'émission. En effet, chaque noeud source ne doit plus alors disposer que d'un ou de plusieurs émetteur(s) optique(s) capable(s) d'émettre une longueur d'onde distincte pour tous les groupements destinataires, soit 30 longueurs d'onde, ce qui représente un gain considérable par rapport à l'architecture point-à-point.

L'utilisation d'une architecture dans laquelle les 900 noeuds optiques sont rassemblés en 30 groupements sources de 30 noeuds optiques chacun (multipoints-à-point) permet de réduire les coûts au niveau des sources de réception. En effet, chaque noeud destinataire ne doit plus alors disposer que de récepteurs optiques capables de recevoir une longueur d'onde distincte pour tous les groupements sources, soit 30 longueurs d'onde, ce qui représente un gain considérable par rapport à l'architecture point-à-point. On rappelle ici que cette architecture présente l'inconvénient de nécessiter la mise en oeuvre d'un contrôleur au niveau du noeud destination, ce qui limite la taille du réseau.

Enfin, le cas d'une architecture telle que décrite précédemment (multipoints à-multipoints) dans laquelle les 900 noeuds optiques sont rassemblés aussi bien, d'une part, en 30 groupements sources de 30 noeuds optiques que, d'autre part, en 30 groupements destinataires de 30 noeuds optiques permet une réduction optimale des coûts combinant les avantages des deux architectures précédentes mais sans en présenter les inconvénients. En effet, chaque noeud source ne doit plus alors disposer que d'un ou de plusieurs émetteur(s) optique(s) capable(s) d'émettre une longueur d'onde distincte pour tous les groupements destinataires (soit 30 longueurs d'onde) et chaque noeud destinataire ne doit plus alors disposer que de récepteurs optiques capables de recevoir une longueur d'onde distincte pour tous les groupements sources (soit 30 longueurs d'onde), ce qui représente un gain considérable en termes de coût par rapport à l'architecture point-à-point. Les coûts en nombre de fibres optiques sont également réduits. Ce cas correspond aux modes de réalisation illustrés sur les figures 2, 4A, 4B, 5A, 5B.

Jusqu'ici, seuls les cas où les groupements sources sont distincts des groupements destinataires ont été évoqués. Cependant, un groupement source peut très bien recouvrir un groupement destinataire, voire se confondre avec lui, afin de permettre la transmission de données au sein d'un même groupement source.

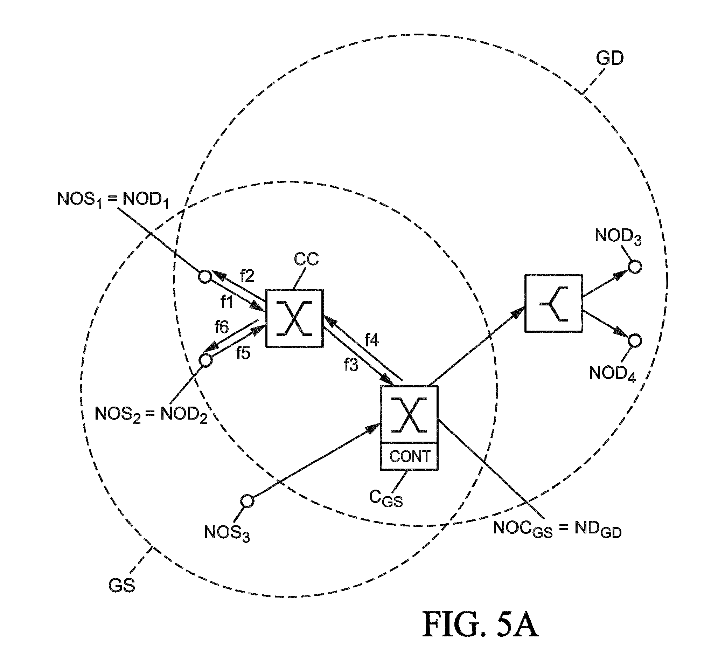

Afin d'illustrer ce dernier cas, on se réfère maintenant à la **figure 5A** qui représente un autre mode de réalisation du réseau optique selon la présente invention.

Dans cet autre mode de réalisation, le réseau comporte à titre purement illustratif un groupement source GS comprenant trois noeuds optiques sources NOS₁ à NOS₃ et un groupement destinataire GD comprenant quatre noeuds optiques destinataires NOD₁ à NOD₄.

Ici, les deux premiers noeuds optiques NOS₁ et NOS₂ appartiennent aussi bien au groupement source GS qu'au groupement destinataire GD, c'est-à-dire qu'ils peuvent aussi bien émettre des données pour le compte du groupement source GS qu'en recevoir. En d'autres termes, ces noeuds optiques sources NOS₁ et NOS₂ correspondent respectivement à des noeuds optiques destinataires NOD₁ et NOD₂ du groupement destinataire GD.

Dans un tel mode de réalisation, le noeud optique servant de noeud concentration NOCG_{S} pour le groupement source GS est également un noeud optique de distribution ND_{GD} du groupement destinataire GD, et le troisième noeud optique source NOS₃ peut alors transmettre des données aux noeuds optiques NOS₁ et NOS₂ de manière interne au groupement source GS, tout en transmettant des données de manière externe vers les autres noeuds optiques destinataires NOD₃ et NOD₄, non inclus dans le groupement source GS, par exemple par l'intermédiaire de l'infrastructure optique INFₒₚₜ (non représentée ici).

Dans ce cas, l'élément optique CC connectant les deux premiers noeuds optiques NOS₁ et NOS₂ au noeud optique de concentration NOC_{GS} doit être aussi bien capable de coupler les signaux optiques émis par ces noeuds NOS₁ et NOS₂, dans le sens montant, que de diffuser un signal agrégé descendant vers ces deux noeuds NOS₁ et NOS₂, dans le sens descendant. Cet élément optique peut alors consister en un coupleur/séparateur ou un commutateur optique.

Par ailleurs, dans la mesure où les noeuds optiques NOS₁ et NOS₂ communiquent de manière bidirectionnelle avec le noeud optique de concentration NOC_{GS} au moyen d'une même longueur d'onde λ_{GS}, deux ensembles distincts de fibres optiques (désignés par f1,f3,f5 d'une part, et f2,f4,f6 d'autre part) sont employés pour relier ces noeuds optiques NOS₁ et NOS₂ au noeud optique de concentration NOC_{GS}, chaque ensemble étant affecté à la transmission dans un sens, montant ou descendant.

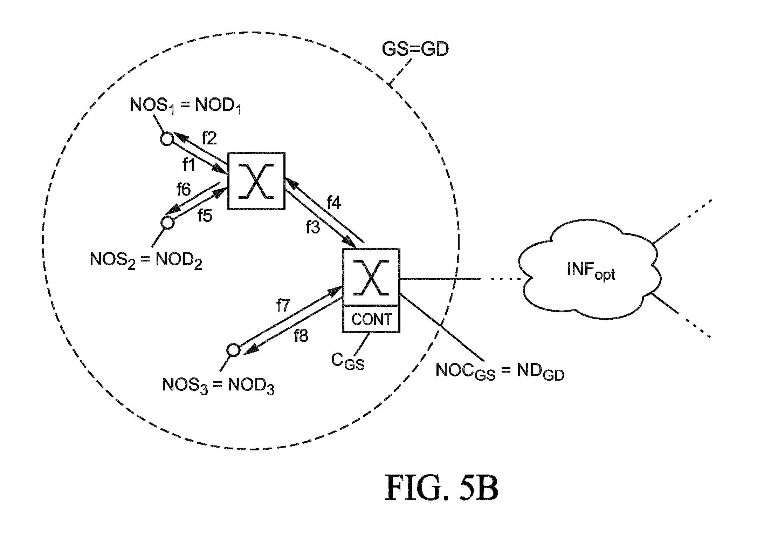

On se réfère maintenant à la **figure 5B** qui illustre un exemple particulier de cet autre mode de réalisation du réseau optique selon la présente invention.

Dans cet exemple particulier, le groupement source GS correspond au groupement destinataire GD, c'est-à-dire qu'il se confond avec ce dernier, tous ses éléments optiques appartenant également au groupement destinataire GD.

Ainsi, chaque noeud optique désigné comme un noeud source NOSᵢ du groupement source GS est également un noeud destinataire NODᵢ du groupement destinataire GD, et le noeud optique servant de noeud de concentration NOC_{GS} pour le groupement source GS est également le noeud optique de distribution ND_{GD} du groupement destinataire GD.

Les différents noeuds optiques de ce groupement source GS communiquant entre eux de manière bidirectionnelle, ils sont connectés entre eux par deux ensembles distincts de fibres optiques (désignés par f1,f3,f5,f7 d'une part, et f2,f4,f6,f8 d'autre part) permettant d'utiliser la même longueur d'onde λ_{GS} aussi bien en voie montante que descendante.

Ainsi, en direction montante, les fibres optiques f1 et f3 sont utilisées pour transmettre un signal optique depuis le noeud optique NOS₁ vers le noeud optique NOC_{GS} , les fibres optiques f5 et f3 sont utilisées pour transmettre un signal optique depuis le noeud optique NOS₂ vers le noeud optique NOC_{GS} et la fibre optique f7 est utilisée pour transmettre un signal optique depuis le noeud optique NOS₃ vers le noeud optique NOC_{GS}.

Inversement, en direction descendante, les fibres optiques f2 et f4 sont utilisées pour transmettre un signal optique agrégé depuis le noeud optique NOC_{GS} vers le noeud optique NOS₁, les fibres optiques f4 et f6 sont utilisées pour transmettre un signal optique agrégé depuis le noeud optique NOC_{GS} vers le noeud optique NOS₂ et la fibre optique f8 est utilisée pour transmettre un signal optique agrégé depuis le noeud optique NOC_{GS} vers le noeud optique NOS₃.

Un tel système bidirectionnel permet donc la transmission de données au sein d'un même groupement, une telle transmission étant gérée « localement » par le contrôleur source C_{CS} sans avoir besoin de transmettre les données dans l'infrastructure.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Il est par ailleurs souligné qu'un noeud optique de concentration peut également jouer le rôle d'un noeud de distribution.

Ainsi, dans les modes de réalisation présentés ci-avant, les groupements sources ont été décrits comme étant connectés aux groupements destinataires au moyen d'un seul chemin optique porté sur une seule longueur d'onde. Il est cependant tout à fait possible d'interconnecter un groupement source avec un groupement destinataire au moyen de plusieurs chemins optiques portés par plusieurs longueurs d'onde WDM, afin d'offrir une plus grande capacité de transmission et de pouvoir interconnecter des groupements de noeuds optiques plus importants, i.e. comportant un nombre de noeuds optiques plus important. Ceci s'applique également aux échanges internes aux groupements.

Aussi, l'utilisation de plusieurs canaux optiques portés par plusieurs longueurs d'onde WDM pour interconnecter un groupement source avec un groupement destinataire est avantageuse dans le cas où le trafic de données engendré par les noeuds optiques sources dépasse la capacité maximale disponible sur une seule longueur d'onde.

Le réseau tout-optique proposé dans la présente invention est particulièrement avantageux, par rapport à un réseau traditionnel où le routage est centralisé, lorsque la distance entre le contrôleur source d'au moins un groupement source GSᵢ et le noeud optique de distribution d'au moins un groupement destinataire GDᵢ est supérieure à 100 km. En effet, au-delà d'une telle distance, dans un réseau traditionnel avec routage centralisé comme illustré en figure 1, le temps de latence d'un ordre d'émission émis par le contrôleur centralisé vers les émetteurs optiques devient trop important, ce qui peut engendrer des retards affectant la qualité de la transmission.

Par ailleurs, le réseau tout-optique selon la présente invention est particulièrement avantageux lorsqu' au sein de chaque groupement de source, la distance entre chaque noeud optique source et le contrôleur source est inférieure à 100 km. En effet, cela permet de limiter le temps de latence des ordres d'émission émis par le contrôleur source vers les émetteurs optiques en deçà d'un certain seuil et donc de limiter l'impact de ce temps de latence sur la qualité de la transmission.

## Revendications

1. Réseau optique de télécommunications comprenant :
au moins deux groupements sources (GS) de noeuds optiques, chaque groupement source comprenant un noeud optique de concentration (NOC_{GS}), un contrôleur source (C_{GS}) et une pluralité de noeuds optiques sources (NOS₁,NOSₘ) connectés audit noeud optique de concentration (NOC_{GS}) ;
au moins un groupement destinataire (GD) de noeuds optiques, chaque groupement destinataire comprenant un noeud optique de distribution (ND_{GD}), une pluralité de noeuds optiques destinataires (NOD₁,NODₙ) connectés audit noeud optique de distribution (ND_{CD}); et
dans lequel, au sein de chaque groupement source, chaque noeud optique source est apte à émettre des signaux optiques à au moins une longueur d'onde (λ_{GS-GD}) spécifiquement allouée à une paire formée du groupement source et d'un groupement destinataire, le contrôleur source (C_{GS}) est configuré pour contrôler l'émission des signaux optiques par les noeuds optiques sources, et le noeud optique de concentration est configuré pour fusionner des signaux optiques émis par les noeuds optiques sources en un signal optique agrégé à partir desdits signaux optiques ; et
dans lequel, au sein de chaque groupement destinataire, le noeud optique de distribution est configuré pour diffuser un signal optique agrégé à la au moins une longueur d'onde (λ_{GS-GD}) spécifiquement allouée à une paire formée d'un groupement source et du groupement destinataire à la pluralité de noeuds optiques destinataires.

2. Réseau optique selon la revendication 1, comprenant en outre une infrastructure optique comportant une pluralités de fibres optiques et connectée auxdits noeuds optiques de concentration et de distribution, dans lequel chaque noeud optique de concentration est en outre configuré pour transmettre le signal optique agrégé à la longueur d'onde spécifiquement allouée à une paire formée du groupement source et d'un groupement destinataire vers au moins un noeud optique de distribution du groupement destinataire (GD) par l'intermédiaire de l'infrastructure optique.

3. Réseau optique selon la revendication 2, comprenant une pluralité de groupements destinataires (GD1,GD2), dans lequel, au sein de chaque groupement source, chaque noeud optique source est apte à émettre des signaux optiques à une pluralité de longueurs d'onde (λ_{GS-GD1}, λ_{GS-GD2}) spécifiquement allouées respectivement à des paires formées du groupement source (GS) et de chacun des groupements destinataires (GD1,GD2).

4. Réseau optique selon l'une des revendications 1 à 3, dans lequel le contrôleur source (C_{GS}) est configuré pour instruire, à chacun des noeuds optiques sources du groupement source, d'émettre le signal optique durant un intervalle de temps d'émission alloué au noeud optique source, l'intervalle de temps étant déterminé dynamiquement en fonction des demandes de trafic des noeuds optiques sources du groupement source.

5. Réseau optique selon l'une des revendications 1 à 4, dans lequel, au sein de chaque groupement de source, la distance entre chaque noeud optique source et le contrôleur source est inférieure à 100 km.

6. Réseau optique selon l'une des revendications 1 à 5, dans lequel la distance entre le contrôleur source d'au moins un groupement source et le noeud optique de distribution d'au moins un groupement destinataire est supérieure à 100 km.

7. Réseau optique selon l'une des revendications 1 à 6, dans lequel au moins un des noeuds optiques sources d'un groupement source correspond à au moins un des noeuds optiques destinataires d'un groupement destinataire.

8. Réseau optique selon la revendication précédente, dans lequel au moins un groupement source correspond à un groupement destinataire, chaque noeud optique source dudit groupement source correspondant à un noeud optique destinataire du groupement destinataire et le noeud optique de concentration dudit groupement source correspondant au noeud optique de distribution du groupement destinataire, chaque noeud optique source étant connecté au noeud optique de concentration par l'intermédiaire d'au moins une fibre optique dédiée à la transmission descendante et une fibre optique dédiée à la transmission montante.

9. Réseau optique selon l'une des revendications précédentes, dans lequel ledit réseau optique est un réseau optique étendu (WAN) ou métropolitain (MAN).

10. Procédé de transmission dans un réseau optique comprenant au moins deux groupements sources (GS) de noeuds optiques, lequel comprend un noeud optique de concentration, un contrôleur source (CS_{GS}) et une pluralité de noeuds optiques sources (NOS₁,NOSₘ) connectés audit noeud optique de concentration (NOC_{GS}), au moins un groupement destinataire (GD) de noeuds optiques, lequel comprend un noeud optique de distribution, une pluralité de noeuds optiques destinataires (NOD₁,NODₙ) connectés audit noeud optique de distribution (ND_{GD}), et une infrastructure optique comprenant une pluralité de fibres optiques et connectée auxdits noeuds optiques de concentration et de distribution, le procédé comprenant, au sein de chaque groupement source :
contrôler (110), au moyen du contrôleur source, l'émission par une pluralité de noeuds optiques sources de signaux optiques à au moins une longueur d'onde (λ_{GS-GD}) spécifiquement allouée à une paire formée du groupement source et d'un groupement destinataire;
fusionner (120), au niveau du noeud optique de concentration du groupement source, la pluralité de signaux optiques émis en un signal optique agrégé à partir desdits signaux optiques;
le procédé comprenant en outre, au niveau du noeud optique de distribution (ND_{GD}) de chaque groupement destinataire :
diffuser (140), aux noeuds optiques destinataires du groupement destinataire, au moins un signal optique agrégé à la au moins une longueur d'onde (λ_{GS-GD}) spécifiquement allouée à une paire formée d'un groupement source et du groupement destinataire.

11. Procédé de transmission selon la revendication 10, comprenant en outre, au niveau de chaque noeud optique de concentration, la transmission (130) du signal optique agrégé à la longueur d'onde spécifiquement allouée au groupement source vers au moins un noeud optique de distribution d'un groupement destinataire (GD) par l'intermédiaire de l'infrastructure optique.

12. Procédé de transmission selon l'une des revendications 10 et 11, dans lequel le contrôle de l'émission de la pluralité de signaux optique, au sein de chaque groupement source, comprend l'envoi d'une instruction à chacun des noeuds optiques sources d'émettre le signal optique durant un intervalle de temps d'émission alloué au noeud optique source, l'intervalle de temps étant déterminé en fonction de la capacité de la longueur d'onde spécifiquement allouée au groupement source.

13. Procédé de transmission selon l'une des revendications 10 à 12, dans lequel le réseau optique comprend une pluralité de groupements destinataires (GD1,GD2), le contrôleur source contrôle l'émission, par la pluralité de noeuds optiques sources, de signaux optiques à une pluralité de longueurs d'onde (λ_{GS-GD1}, λ_{CS-CD2}) spécifiquement allouées respectivement à des paires formées du groupement source (GS) et de chacun des groupements destinataires (GD1,GD2).
